# EUROPEAN PATENT SPECIFICATION

(11) **EP 3 938 272 B1**
(45) Date of publication and mention of the grant of the patent: **21.02.2024**
(21) Application number: 20770656.5
(22) Date of filing: 10.03.2020
(51) Int. Cl.: B62M 1/24, B62M 3/00, B62M 6/50, B62M 6/60, B62M 6/80, B62M 19/00, B62K 5/01, B62J 45/413

(54) **PEDAL ARRANGEMENT AND ELECTRIC VEHICLE**
PEDALANORDNUNG UND ELEKTROFAHRZEUG
AGENCEMENT DE PÉDALE ET VÉHICULE ÉLECTRIQUE

(30) Priority: 11.03.2019 FI 20195177
(43) Date of publication of application: 19.01.2022
(73) Proprietor: Scouter Mobility Oy, 33540 Tampere (FI)
(72) Inventor: PITKÄNEN, Petri, 37500 LEMPÄÄLÄ (FI)
(74) Representative: Berggren Oy
(86) International application number: PCT/FI2020/050148
(87) International publication number: WO 2020/183061

(56) References cited:
- WO-A1-2014/108579
- CN-A- 102 079 359
- CN-U- 203 381 744
- CN-U- 204 750 463
- DE-A1-102009 032 033
- US-A1- 2013 081 892
- US-A1- 2013 168 942
- US-A1- 2014 262 578

## Description

### Object of the invention

The object of the presented solution is a pedal arrangement for a vehicle. A further object of the presented solution is an electric vehicle including a pedal arrangement.

### Background of the invention

In vehicles based on mechanical or electric implementation, it is possible, by means of pedals moved by a person, to generate mechanical energy needed for the advancing of the vehicle and/or generate electric energy needed by the vehicle's electric system or drive transmission. It is possible to execute the pedals, for example, by pedal cranks based on continuous rotational movement and pedals, which are rotated around a hub in the vehicle frame. By means of a power transmission apparatus coupled to the pedals, for example, a chain pulley and a chain, it is possible to transmit the mechanical energy of the pedals elsewhere to the vehicle and to be used there in a desired way.

Embodiments of vehicles are very different and thus there is a need for vehicles and their pedal arrangements, which are compact, reliable to operate and applicable to be used, for example, in vehicles based on an electric drive transmission.

CN 204750463 U discloses a pedal arrangement for a vehicle including a single pair of reciprocating pedals for generating electricity that drives the vehicle. US 2014/0262578 A1 discloses a pedal arrangement for a vehicle including a single pair of reciprocating pedals for charging a battery, and the vehicle is driven by an electric motor.

A pedal arrangement for a vehicle including a single pair of reciprocating pedals, power transmission apparatus and shaft arrangements, and a generator according to the preambles of claims 1 and 7 is disclosed in CN 102079359 A.

### Summary of the invention

The pedal arrangement for a vehicle according to the invention is presented in the enclosed claim 1.

Another pedal arrangement for a vehicle according to the invention is also presented in the enclosed claim 7.

The electric vehicle including a pedal arrangement according to the invention is also presented in the enclosed claim 10.

Advantages of the presented pedal arrangement are slight use of space, because the pedal movement is based on reciprocating movement instead of rotating motion. This also makes possible the compact structure of the pedal arrangement, because the components of the pedal arrangement and the components of the associated mechanical power transmission apparatus can be placed in the proximity of or adjacent to the pedals, when needed, because the movement of the pedals is limited. Thus, also the components of the pedal arrangement become simpler.

The length of the pedal cranks of the presented pedal arrangement can be fitted longer than that of rotating pedal cranks, when the same space is available. Thus, the pedal force generated by the user achieves a larger torque and kinetic energy with longer pedal cranks, which is utilised, for example, in a generator.

The presented pedal arrangement makes also possible to place two pedal pairs side by side and to couple them to a common power transmission shaft or a pair of power transmission shafts. The presented pedal arrangement makes possible the placing of components associated with the pedal arrangement into a place, in which they are not in the way of the vehicle's driver, for example, in the legroom of the vehicle.

The said pedal arrangement makes it possible to convert the generated mechanical energy into electric energy by means of a generator coupled to the pedal arrangement. The pedal arrangement makes it possible to place the generator and associated mechanical power transmission apparatus more freely and in a compact form, as the mechanical energy generated by the pedals is not exploited in the drive transmission of the vehicle, but only in the generation of electric energy.

With the presented pedal arrangement, the vertical movement of the user's knees is smaller than with rotating pedal cranks, which makes it possible to place the vehicle controls, such as the steering wheel, into a place which is optimal for the user's hands and taking into account safe driving and ergonomics. The knee movement may even only be a third compared to the knee movement caused by rotating pedal cranks. The space reserved for the movement of feet, especially the legroom and its height in particular may thus be smaller than with rotating pedal cranks. This makes possible, among others, high clearance and even base of the vehicle.

### Short description of drawings

The invention is next explained by simultaneously referring to the enclosed figures and reference numbers of their different components.

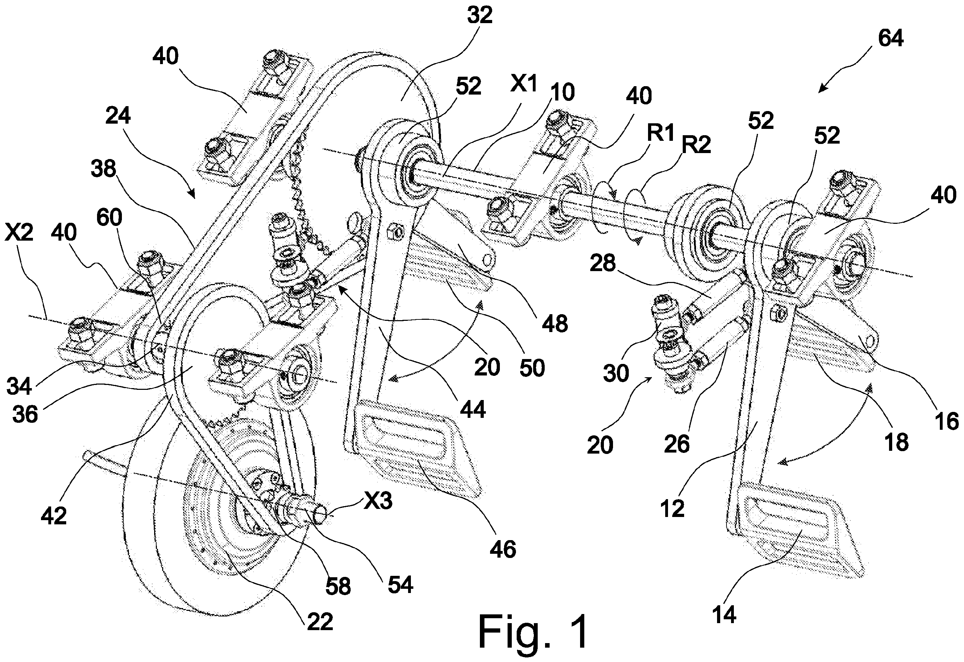

Figure 1 illustrates a first embodiment of the pedal arrangement for a vehicle according to the invention, seen obliquely from above, being essentially horizontal in its one position of use.

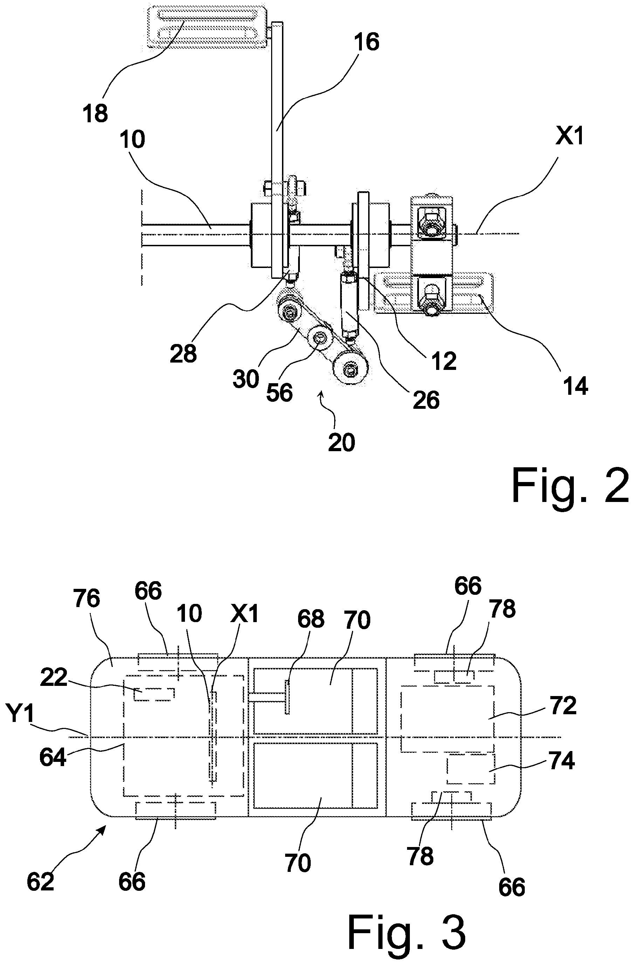

Figure 2 illustrates a detail of the pedal arrangement of Figure 1 seen from above.
Figure 3 illustrates an electric vehicle in which the pedal arrangement of the invention is applied, shown as a simplified schematic view and seen from above.
Figure 4 illustrates the implementation of a detail of the pedal arrangement of Figure 1 in accordance with a second embodiment of the pedal arrangement for a vehicle according to the invention, seen obliquely from above, being essentially horizontal in its one position of use.
Figure 5 illustrates the implementation of a detail of the pedal arrangement of Figure 1 in accordance with the second embodiment of the pedal arrangement for a vehicle according to the invention.
Figure 6 illustrates the implementation of a second detail of the pedal arrangement of Figure 1 in accordance with an example of the second embodiment of the pedal arrangement for a vehicle according to the invention.

### Detailed specification of different examples of the invention

The pedal arrangement of the invention is intended especially for vehicles; for example, for electric vehicles.

According to the first embodiment of the invention, the pedal arrangement 64 comprises a first power transmission shaft 10, to which at least one pair of pedal cranks 12, 16 is coupled, to which pedals 14, 18 in turn have been connected.

The first power transmission shaft 10 defines a fictitious first rotation axis X1, and it is adapted to rotate at least in a first direction of rotation R1 about the rotation axis X1. The rotation axis X1 in question is most appropriately parallel to the longitudinal direction of the power transmission shaft 10.

In its position of use, the power transmission shaft 10 is, for example, essentially horizontal.

The first pedal crank 12 has a first end, which is coupled to the first power transmission shaft 10, and a second end, to which the first pedal 14 is rotatably connected for a user's foot. The first pedal crank 12 is adapted to perform reciprocating rotary movement in relation to the first rotation axis X1. The movement of the pedal is curvilinear and limited to occur between two different angular positions.

The second pedal crank 16 has a first end, which is connected to the first power transmission shaft 10, and a second end, to which the second pedal 18 is rotatably connected for the user's other foot. The second pedal crank 12 is adapted to perform reciprocating rotary movement in relation to the first rotation axis X1.

According to one example, the movement of the pedals 14, 18 is curvilinear and limited to occur between two different angular positions. When the first pedal 14 is in one angular position, the second pedal is in the second angular position. The pedals 14, 18 move in opposite directions.

The pedal arrangement further comprises a generator 22, which is coupled to the first power transmission shaft 10 via a mechanical power transmission apparatus 24.

The generator 22 is, for example, of the type, in which there is an input shaft 54 to rotate the generator and which is adapted to convert the mechanical energy of the rotary movement of the input shaft 54 into electric energy. The generator 22 is, for example, shaped as a disc with its input shaft 54 in its hub. The generator 22 or its input shaft 54 defines a fictitious third rotation axis X3. It is most preferable that the rotation axis X3 is parallel to the rotation axis X1 and/or a rotation axis X2.

The mechanical power transmission apparatus 24 is adapted to convert the rotary movement of the power transmission shaft 10 into rotary movement occurring in the generator 22; for example, into the rotary movement of its input shaft 54.

According to one example, the pedal arrangement further comprises synchronisation elements 20, which are connected to the first pedal crank 12 on the one hand, and to the second pedal crank 16 on the other hand. The synchronisation elements 20 are adapted to force the first pedal crank 12 to move in a second direction of rotation R2 while the second pedal crank 16 is simultaneously forced by the user to move in the first direction of rotation R1, which is opposite to the second direction of rotation R2. The synchronisation elements 20 are further adapted to force the second pedal crank 16 to move in the second direction of rotation R2 while the first pedal crank 12 is simultaneously forced by the user to move in the first direction of rotation R1.

According to one example, the synchronisation elements comprise a first push rod 26, which is articulatedly connected to the first pedal crank 12, and a second push rod 28, which is articulatedly connected to the second pedal crank 16, and a rigid lever 30, a first end of which is articulatedly connected to the first push rod 26 and a second end of which is articulatedly connected to the second push rod 28. According to an example, the lever 30 is adapted to be coupled so that its first and second ends can move back and forth. For example, in a middle section of the lever 30 there are connection elements 56 for connecting it articulatedly, for example, to a vehicle frame. The movement of the lever 30 is limited to occur between two different angular positions.

As the first pedal crank 12 moves in the first direction of rotation R1, the first push rod 26 is adapted to force the lever 30 to turn and simultaneously push the second push rod 28, which in turn forces the second pedal crank 16 to return and move in the second direction of rotation R2.

As the second pedal crank 16 moves in the first direction of rotation R1, the second push rod 28 is in turn adapted to force the lever 30 to turn in the direction, which is opposite in relation to the above-mentioned lever movement, and simultaneously push the first push rod 26, which again forces the first pedal crank 12 to return and move in the second direction of rotation R2.

The return of the pedal most preferably refers to a movement, in which the pedal moves towards the user and, at the same time, the user's knee bends. The user moves the pedal by pushing it away from oneself, most preferably by stretching the leg.

According to one example, the first pedal crank 12 is connected to the first power transmission shaft 10 with such a clutch arrangement 52, which first of all forces the first power transmission shaft 10 to rotate in the first direction of rotation R1 while the first pedal crank 12 simultaneously also moves in the first direction of rotation R1. In addition to this, the said clutch arrangement 52 allows the rotation of the first power transmission shaft 10 to continue in the first direction of rotation R1 at the same time as the first pedal crank 12 is immobile or moves in the second direction of rotation R2.

In the example above, the second pedal crank 16 is additionally connected to the first power transmission shaft 10 with a second clutch arrangement 52, which first of all forces the first power transmission shaft 10 to rotate in the first direction of rotation R1 at the same time as the second pedal crank 16 also moves in the first direction of rotation R1. In addition to this, the said clutch arrangement allows the rotation of the first power transmission shaft 10 to continue in the first direction of rotation R1 while the second pedal crank 16 is simultaneously immobile or it moves in the second direction of rotation R2.

By means of the clutch arrangements 52 described above, it is possible to maintain the continuous rotary movement of the first power transmission shaft 10 in the first direction of rotation R1 at the same time as the pedals move back and forth and the user applies force alternately to the pedals.

According to one example, the above-mentioned clutch arrangement 52 comprises a freewheel clutch, which rotates freely in one direction of rotation, most preferably in the second direction of rotation R2, and to transmit the rotary movement, for example, to the first power transmission shaft 10, it locks when rotating in the opposite direction of rotation, most preferably in the first direction of rotation R1. This makes possible the rotation of the first power transmission shaft 10 by pushing a pedal, and the pedal can return freely while it simultaneously allows the first power transmission shaft 10 to be rotated by means of the push movement of another pedal.

According to one example, the mechanical power transmission apparatus 24 is adapted to form a predetermined fixed transmission ratio between an input shaft and an output shaft. In this solution, the input shaft is the first power transmission shaft 10 and the output shaft is a rotating component of the generator 22, for example, its rotor or, most preferably, the input shaft 54 of the generator 22.

According to one example, to execute the desired fixed transmission ratio, the mechanical power transmission apparatus 24 comprises a second power transmission shaft 34, which defines the fictitious second rotation axis X2 and which is fitted to rotate about the second rotation axis X2. The first power transmission shaft 10 is simultaneously adapted to rotate the second power transmission shaft 34 by means of a chain 38 or a belt or similar. To the second power transmission shaft 34 there may be coupled a belt pulley 60, to which the chain 38, the belt or similar is connected.

In the example above, the mechanical power transmission apparatus 24 further comprises a second chain pulley 36 or a belt pulley or similar, which is connected to the second power transmission shaft 34 and adapted to rotate simultaneously with the second power transmission shaft 34. The said second chain pulley 36 or the belt pulley or similar is adapted to simultaneously rotate the generator 22, for example, its input shaft 54. To the generator 22, for example, its input shaft 54, there may be coupled a belt pulley 58, to which a chain 42, a belt or similar is connected.

According to one example, the mechanical power transmission apparatus 24 further comprises a gearing with stepless or stepped operation so that the said transmission ratio can be selected to be stepless or stepped. The gearing is, for example, automatically adjustable, electrically or mechanically controllable.

According to one example, the mechanical power transmission apparatus 24 comprises a first chain pulley 32 or a belt pulley or similar, which is coupled to the first power transmission shaft 10.

The said first chain pulley 32 or the belt pulley or similar may be located between the first pedal crank 12 and the second pedal crank 16. This makes possible compact placing and the first power transmission shaft 10 to be short.

The said first chain pulley 32 or the belt pulley or similar may be adapted to simultaneously rotate with the first power transmission shaft 10, and it is fitted to simultaneously rotate the said second power transmission shaft 34 via the said chain 38, the belt or similar.

According to one example, the first power transmission shaft 10 is essentially parallel to the second power transmission shaft 34. In addition, they are most preferably horizontal.

According to one example, as the pedal arrangement is in its one position of use, the first pedal crank 12 and second pedal crank 16 are suspended below the first power transmission shaft 10 and adapted to perform there the said reciprocating movement. This provides unobstructed space for the user's feet and their movement.

According to one example, as the pedal arrangement is in its above-mentioned position of use, the generator 22 is, observed in a horizontal direction, located on that side of the first power transmission shaft 10, in the direction of the side of which the first and second pedal cranks 12, 16 move when they rotate in the first direction of rotation R1. This makes possible that the user and the generator are on different sides of the first power transmission shaft 10, thus providing more unobstructed space for the user.

According to one example, as the pedal arrangement is in its above-mentioned position of use, the synchronisation elements 20 are, observed in a horizontal direction, located on that side of the first power transmission shaft 10, in the direction of the side of which the first and second pedal cranks 12, 16 move when they in their turn rotate in the first direction of rotation R1.

According to one example, the transmission ratio of the said mechanical power transmission apparatus 24 is adapted to set the rotational speed of the generator 22, for example the rotational speed of its input shaft 54, to be multiple in relation to the rotational speed of the first power transmission shaft 10.

According to one example, the pedal arrangement further has several bearing units 40, each of which comprises a bearing housing, via which the bearing unit is connected to the first or second power transmission shaft 10, 34, and additionally a support part, via which the first or second power transmission shaft 10, 34 is attachable to a desired place; for example, a vehicle frame, for example its structures above the legroom in the frame.

The said pedal arrangement is for one user or for two users that are side by side. The pedal arrangement further comprises a second pair of pedals.

The pedal arrangement further comprises a third pedal crank 44, which has a first end connected to the first power transmission shaft 10, and a second end, to which a third pedal 46 is rotatably coupled for the foot of the second user. The third pedal crank 44 is adapted to perform reciprocating rotary movement in relation to the first rotation axis X1.

The pedal arrangement further comprises a fourth pedal crank 48, which has a first end connected to the first power transmission shaft 10, and a second end, to which a fourth pedal 50 is rotatably coupled for the other foot of the second user. The fourth pedal crank 48 is adapted to perform reciprocating rotary movement in relation to the first rotating axis X1.

According to one example, the movement of the pedals 46, 50 is curvilinear and limited to occur between two different angular positions. When the third pedal 46 is in one angular position, the fourth pedal 50 is in the second angular position. The pedals 46, 50 move in opposite directions.

According to one example, the place of the pedal 14, 18, 46, 50 at the end of the pedal crank 12, 16, 44, 48 and, at the same time, its distance from the first power transmission shaft 10 and the first rotation axis X1 is adjustable either in a stepless or stepwise manner. This is done, for example, by means of fastening elements for the pedals 14, 18, 46, 48. For the pedal 14, 18, 46, 48 there are, for example, three alternative fastening points, for example, at 30 mm intervals. This makes possible the adjustment of the pedal arrangement 64 and especially the pedals 14, 18, 46, 48 to suit different users so that, for example, the dimensions and paths of the user's foot, leg or body can be taken into account.

An electric vehicle 62, in which the pedal arrangement 64 presented above is applied, comprises a frame 76. The pedal arrangement 64 is attached to the frame 76 and fitted into its position of use. The electric vehicle 62 further has a seat 70 for a pedalling person and, according to one example, legroom in the frame 76 for the person's feet. The pedals 46, 50 are located in the legroom.

In the placement of the pedal arrangement 64, the positions of use and placing principles for the pedal arrangement 64 may be applied, which are described above. This makes possible, for example, the compact structure and spacious legroom for the user, as has been described above.

It is most preferable that the first power transmission shaft 10, i.e. the first rotation axis X1 is located in the upper section of the legroom above the first and second pedal cranks 12, 16 so that, in the position of use, it is essentially horizontal and transverse, or essentially perpendicular to the longitudinal direction Y1 of the frame 76. This way the power transmission shaft 10 is located above the pedals 46, 50 and the user's feet. A respective placement is most preferably used also for the third and fourth pedal cranks 46, 50.

It is also most preferable that, observed in a horizontal direction, the generator 22 is located on the opposite side of the first power transmission shaft 10, i.e. the first rotation axis X1 in relation to the seat 70.

According to one example, also the said mechanical power transmission apparatus 24 and/or the said synchronisation elements 20 are, observed in a horizontal direction, located on the opposite side of the first power transmission shaft 10, i.e. the first rotation axis X1 in relation to the seat 70, and in this case they are, for example, together with the generator 22 on the same side of the power transmission shaft 10, i.e. on the same side of the first rotation axis X1.

According to one example, the pedal arrangement 64 is adapted to utilise mechanical energy in the generator 22 but, for example, not in a mechanical drive transmission, by means of which the electric vehicle 62 would move. The purpose of the pedal arrangement 64 is, for example, to generate electric energy by means of the generator 22, which is stored, for example, to a storage battery 72 and/or utilised, for example, in an electric transmission system 78. A simple, compact structure is thus achieved, as it is not necessary to take into account, for example, a mechanical drive transmission in the pedal arrangement 64.

According to one example, the pedal arrangement 64, the first power transmission shaft 10 and the mechanical power transmission apparatus 24 are fitted separately from the said electric transmission system 78 and to convert mechanical energy into electric energy by means of the generator 22, which is used to move the electric vehicle 62.

For example, to store electric energy, the generator 22 for the pedal arrangement 64 is coupled to the storage battery 72, for example, by means of an electronic control unit 74.

According to one example, at least three or four wheels 66 are rotatably coupled to the frame 76, to at least one of which there is attached the electric transmission system 78 to move the electric vehicle 62. Also, the storage battery 72 for storing electric energy and/or supplying electric energy to the electric transmission system 78 may be located in the frame 76.

The electronic control unit 74 may also be installed in the frame 76, the electronic control unit controlling the operation of the storage battery 72 and/or the electric transmission system 78. With apparatuses and controls coupled to the electronic control unit 74, the user can, for example, control the operation of the electric vehicle 62, for example, during driving.

According to one example, the electric vehicle 62 has two seats 70 side by side, for either one or two pedalling persons, and legroom in the frame 76 for the persons' feet. The electric vehicle 62 may further include controls 68, such as a steering wheel to control the direction of travel of the electric vehicle 62. The position of the controls 68 may be adjustable. The legroom observed in a horizontal direction and in the longitudinal direction Y1 of the frame 76 is located in front of the seat 70 and the first and second pedal cranks 12, 16 of the pedal arrangement 64 are placed in the legroom. The said longitudinal direction Y1 is simultaneously the direction, with which the pedalling person is aligned when sitting in the seat 70, while the feet are in the legroom.

According to one example, as the pedal arrangement 64 comprises the third and fourth pedal cranks 44 and 48 in the manner presented above, each pedal crank 44, 48 is coupled to the first power transmission shaft 10 with such a clutch arrangement 52, which corresponds to the examples and functions presented in connection with the first and second pedal cranks 12, 16.

In other words, the third pedal crank 44 is coupled to the first power transmission shaft 10 with such a clutch arrangement 52 which, first of all, forces the first power transmission shaft 10 to rotate in the first direction of rotation R1 at the same time as the third pedal crank 44 moves in the first direction of rotation R1. In addition to this, the said clutch arrangement 52 allows the rotation of the power transmission shaft 10 to continue in the first direction of rotation R1, while the third pedal crank 44 is immobile or it moves in the second direction of rotation R1.

In the example above, the fourth pedal crank 48 is further coupled to the first power transmission shaft 10 with such a second clutch arrangement 52 which, first of all, forces the first power transmission shaft 10 to rotate in the first direction of rotation R1 at the same time as the fourth pedal crank 48 moves in the first direction of rotation R1. In addition to this, the said clutch arrangement 52 allows the rotation of the first power transmission shaft 10 to continue in the first direction of rotation R1, while the fourth pedal crank 48 is immobile or it moves in the second direction of rotation R2.

With the clutch arrangements 52 described above, it is possible to maintain the continuous rotary movement of the first power transmission shaft 10 in the first direction of rotation R1 at the same time as the pedals move back and forth and the user applies forces alternately to the pedals 46, 50.

The terms first, second, third and fourth used in the specification below and referring to different components do not define or limit the total quantity of these components, but they only distinguish the components from each other, for example so that the references "first" and "second" are separate components.

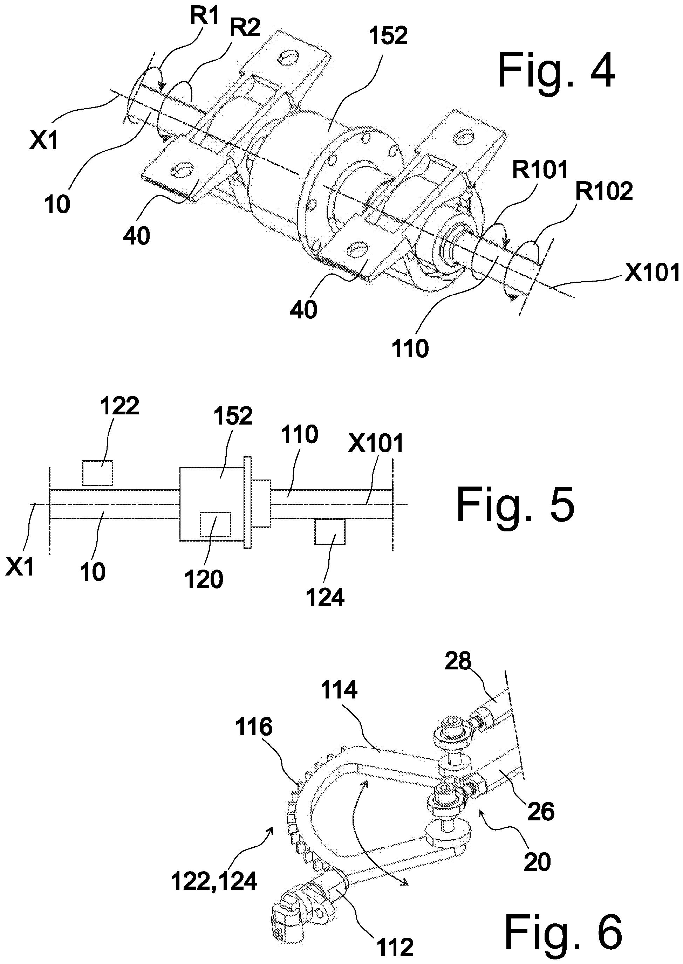

According to the second embodiment of the invention, and in accordance with Figure 4, the pedal arrangement 64 further comprises an additional power transmission shaft 110. To the additional power transmission shaft 110 there is coupled at least one pair of pedal cranks.

For example, the pedal cranks 12 and 16 presented above, their clutch elements 52 and synchronisation elements 20 are coupled to the additional power transmission shaft 110 instead of the first power transmission shaft 10. The additional power transmission shaft 110 is forced into rotary movement by means of the reciprocating movement of the pedal cranks 12, 16 in the way presented above.

The additional power transmission shaft 110 defines a fictitious additional rotation axis X101 and it is adapted to rotate about the additional rotation axis X101 at least in a third direction of rotation R101, which is opposite to a fourth direction of rotation R102. The said additional rotation axis X101 is most preferably parallel to the longitudinal direction of the additional power transmission shaft 110.

In its position of use, the additional power transmission shaft 110 is, for example, essentially horizontal.

The additional power transmission shaft 110 is parallel to the first power transmission shaft 10 and, simultaneously, the additional rotation axis X101 is parallel to the first rotation axis X1. In addition, according to one example, the third direction of rotation R101 is uniform with the first direction of rotation R1.

The additional power transmission shaft 110 is an extension to the first power transmission shaft 10 as in Figure 5 and, simultaneously, the additional rotation axis X101 joins with the first rotation axis X1.

According to one example, the pedal cranks 12 and 16 shown above, their clutch elements 52 and synchronisation elements 20 are coupled to the additional power transmission shaft 110 so that their operation corresponds to what is presented above as they are connected to the first power transmission shaft 10. In this case, the third direction of rotation R101 equals the first direction of rotation R1 and the fourth direction of rotation R102 equals the second direction of rotation R2.

According to one example, the pedal arrangement further has one or several bearing units 40, each of which comprises a bearing housing, via which the bearing unit is coupled to the additional power transmission shaft 110, and also a support element, with which the additional power transmission shaft 110 is attachable to a desired object; for example, the vehicle frame, for example to its structures above the legroom in the frame.

According to one example, the additional power transmission shaft 110 is coupled to the first power transmission shaft 10 so that as the additional power transmission shaft 110 is in rotary movement (direction of rotation R102), also the first power transmission shaft 10 is forced into rotary movement (direction of rotation R2). This concerns for example, only the directions of rotation R1 and R102, but not the directions of rotation R2 and R102.

According to an example in Figure 4, the additional power transmission shaft 110 is coupled to the first power transmission shaft 10 with such an additional clutch arrangement 152 which, first of all, forces the first power transmission shaft 10 to rotate in the first direction of rotation R1 at the same time as the additional power transmission shaft 110 rotates in the third direction of rotation R101. In addition to this, the said additional clutch arrangement 152 allows the rotation of the first power transmission shaft 10 to continue in the first direction of rotation R1 at the same time as the additional power transmission shaft 110 is immobile or moves in the fourth direction of rotation R102.

According to an example in Figure 4, the additional clutch arrangement 152 is coupled both to an end of the first power transmission shaft 10 and to an end of the additional rotation axis X101, the purpose of this being, as presented above, to transmit the rotary movement selectively from the additional rotation axis X101 to the first power transmission shaft 10.

According to an example, the additional clutch arrangement 152 mentioned above comprises a freewheel clutch, which rotates freely in one direction of rotation, most preferably in the second/fourth direction of rotation R2/R102. To transmit the rotary movement from the additional rotation axis X101 to the first power transmission shaft 10, the additional clutch arrangement 152 locks when rotating in the opposite direction of rotation, i.e. in the first/third direction of rotation R1/R101.

According to an example in Figure 5, the pedal arrangement 64 further comprises a first sensor device 122, which is adapted to detect, whether the third pedal crank 44 and/or the fourth pedal crank 48 is in such movement, which forces the first power transmission shaft 10 into rotary movement; for example, into rotary movement in the first direction of rotation R1. According to one example, the sensor device 122 generates an electric measuring signal, on the basis of which it can be concluded whether the pedal crank 44, 48 in question is in the said movement. According to one example, on the basis of the said electric measuring signal also the velocity of the movement in question can be concluded.

The first sensor device 122 may be applied in the manner presented above also in the alternative for the pedal arrangement 64, which does not utilise the additional power transmission shaft 110.

The first sensor device 122 may be by the first power transmission shaft 10 or coupled to it.

Alternatively, especially in the alternative utilising the additional power transmission shaft 110, the first sensor device 122 is, instead of the first power transmission shaft 10, connected to the third pedal crank 44 and/or to the fourth pedal crank 48, or to some other part of the pedal arrangement 64, which is moving simultaneously with the said pedal crank 44, 48 and by means of which it can be concluded whether the said pedal crank is moving (causing the rotary movement of the first power transmission shaft 10 in the direction of rotation R1). The part in question is, for example, the synchronisation elements 20 belonging to the said pedal cranks or the clutch arrangement 52 of the said pedal crank.

According to another example, the pedal arrangement 64 comprises a second sensor device 124, which is adapted to detect whether the first pedal crank 12 and/or the second pedal crank 16 is in such movement, which forces the additional power transmission shaft 110 into rotary movement; for examples, into rotary movement in the third direction of rotation R101. In this example, the pedal cranks 12, 16 are coupled to the additional power transmission shaft 110 in the way presented above. In this example, the additional power transmission shaft 110 is coupled to the first power transmission shaft 10 so that the rotary movement (direction of rotation R101) of the additional power transmission shaft 110 forces the first power transmission shaft 10 into rotary movement (direction of rotation R1).

When the additional power transmission shaft 110 is not in use, the second sensor device 124 is adapted to detect whether the first pedal crank 12 and/or the second pedal crank 16 is in such movement, which forces the first power transmission shaft 10 into rotary movement; for example, into rotary movement in the first direction of rotation R1.

According to an example, the second sensor device 124 generates an electric measuring signal, on the basis of which it can be concluded, whether the pedal crank 12, 16 in question is moving. According to one example, on the basis of the said electric measuring signal also the velocity of the movement in question can be concluded.

In accordance with Figure 5, the second sensor device 124 may be by the additional power transmission shaft 110 or coupled to it.

Alternatively, especially in the alternative without the additional power transmission shaft 110, the second sensor device 124 is, instead of the first power transmission shaft 10 and the additional power transmission shaft 110, coupled to the first pedal crank 12 and/or to the second pedal crank 16, or to some other such part of the pedal arrangement 64, which is moving simultaneously with the said pedal crank 12, 16 and by means of which it can be concluded, whether the said pedal crank is moving (causing the rotary movement of the first power transmission shaft 10 or the additional power transmission shaft 110 in the direction of rotation R1 or R101). The said part is, for example, the synchronisation elements 20 belonging to the said pedal cranks or the clutch arrangement 52 for the said pedal crank.

According to one example, the pedal arrangement 64 comprises a third sensor device 120, which is located in or coupled to the additional clutch arrangement 152 described above. The third sensor device 120 is adapted to detect the rotary movement of the additional power transmission shaft 110 in the third direction of rotation R101. Of this it can be concluded whether the pedal crank 12, 16 is in motion (forcing the rotary movement of the additional power transmission shaft 110 in the direction of rotation R101). According to one example, the third sensor device 120 generates an electric measuring signal, on the basis of which it can be concluded whether the pedal crank 12, 16 is moving. According to one example, also the velocity of the said movement can be concluded on the basis of the said electric measuring signal.

The sensor device 120, 122 and/or 124 may be connected with the electronic control unit 74 for the electric vehicle 62, which controls the operation of the electric vehicle 62 and/or the electric transmission system 78 on the basis of said one or several measuring signals.

The sensor device 120, 122 and/or 124 may apply sensors and principles known per se and, at least partly, be based on mechanical, electric, magnetic, inductive or capacitive operation.

According to one example, the first sensor device 122 and/or the second sensor device 124 may be executed so that it is connected to the synchronisation elements 20. In this case, in accordance with the example in Figure 6, the said sensor device 122, 124 comprises a mechanism 114 moving along with the synchronisation elements 20 and a stationary sensor 112, which is adapted to detect the movement of the mechanism 114, generating an electric measuring signal, on the basis of which it can be concluded whether the mechanism 114 is moving; in other words, whether the respective first and second pedal cranks 12, 16 or the third and fourth pedal cranks 44, 48 are in such motion, which forces the respective first power transmission shaft 10 or the additional power transmission shaft 110 into rotary movement (direction of rotation R1/R101).

According to one example, the mechanism 114 comprises a cogging 116, which travels past the sensor 112 as the mechanism 114 is moving. The sensor 112 detects the movement of the cogging 116 based, for example, on an inductive operation principle. The sensor 112 is attached, for example, to the vehicle frame.

With the sensor devices described above, special benefits are achieved in the electric vehicle 62, which has at least two pairs of pedal cranks in a manner presented above. In this case, also the additional power transmission shaft 110 may be utilised, when needed. The generator 22 is then also coupled to the first power transmission shaft 10 via the mechanical transmission device 24.

In the said electric vehicle 62, one pair of pedal cranks (i.e. the pedal cranks 44, 48) are coupled to the first power transmission shaft 10; for example, for a passenger pedalling next to a driver. In this specification, driver refers to such a pedalling person, who takes care of the control of the direction of travel and functions in the electric vehicle 62, such as breaking, for example, by means of the controls 68.

A second pair of pedal cranks (i.e. the pedal cranks 12, 16), for example, for the driver, is connected to the first power transmission shaft 10 in accordance with the first embodiment of the invention, when the additional power transmission shaft 110 is not in use, or in accordance with the second embodiment of the invention, the said second pair of pedal cranks is coupled to the additional power transmission shaft 110.

Following one example, at least the second sensor device 124 is used in the said first embodiment, which is connected as presented above (for example, to the pedal cranks 12, 16) instead of the first power transmission shaft 10. In addition, also the first sensor device 122 may be used, which is coupled as presented above (for example, to the pedal cranks 44, 48) instead of the power transmission shaft 10.

Following one example, at least the second sensor device 124 is used in the above-mentioned second embodiment, which is either connected to the additional power transmission shaft 110 or, instead of the additional power transmission shaft 110, the second sensor device 124 is coupled as has been presented above (for example, to the pedal cranks 12, 16). In addition to this, also the first sensor device 122 may be used, which is connected as has been presented above (for example, to the pedal cranks 44, 48) instead of the power transmission shaft 10.

Following one example, at least the third sensor device 120 is used in the above-mentioned second embodiment. In addition to this, also the second sensor device 122 may be used, which is connected as has been presented above (for example, to the pedal cranks 44, 48) instead of the power transmission shaft 10.

In the embodiments presented above, based on the measuring signals generated by the sensor devices, for example, the measuring signals generated by the sensor devices 120 and 124, it is now possible, based on a predetermined algorithm, to conclude in the electronic control unit 74 at each moment, whether the driver is pedalling or not. In addition to this, based on the measuring signals generated by the sensor devices, for example, the measuring signal generated by the sensor device 122, it can also be concluded in the electronic control unit 74 at each moment, whether the passenger is pedalling or not.

On the basis of said deduction, it is now possible to control the operation of the electric vehicle 62 and/or the electric transmission system 78 by means of the electric control unit 74, based on the operation of the driver (when the driver uses the controls 68, pedals, or does not pedal) irrespective of the operation of the passenger (i.e. the passenger pedals, or does not pedal).

What has been presented above is of advantage, for example, in a situation in which the electric vehicle 62 is held momentarily stopped by the driver (for example so that the driver is not pedalling) and irrespective of whether the passenger is pedalling or not.

What has been presented above is also of advantage, for example, in a situation in which, for example after a stop or after having been stationary, the electric vehicle 62 is set in motion or it is kept in motion by the driver (for example so that the driver is pedalling) and irrespective of whether the passenger is pedalling or not.

When the electric vehicle stays still or is stationary also when the passenger is pedalling, the storage battery 72 may be recharged while being stationary. According to another example, the passenger may start pedalling while the electric vehicle 62 is not moving or it has been stopped, but the benefit here is that by means of the presented solution the passenger's pedalling is not interpreted as a command for the electric vehicle 62 to start moving. Only after the driver starts pedalling, this is a command for the electric vehicle 62 to move.

Thus, the benefits to be achieved increase the safe use of the electric vehicle 62 and it operates in an unsurprising way, for example, in the driver's control.

The examples presented above are not limited only to alternatives, in which there are two pedal crank pairs, but also to the examples, in which the pedal arrangement or the electric vehicle comprises three or several pedal crank pairs.

The presented solution is specified more closely in accordance with the enclosed claims.

## Claims

1. A pedal arrangement for a vehicle, comprising:
- a first power transmission shaft (10), which defines a fictitious first rotating axis (X1) and which is adapted to rotate at least in a first direction of rotation (R1) about the first rotating axis (X1);
- a generator (22), adapted to convert mechanical energy of rotary movement into electric energy;
- a mechanical power transmission apparatus (24), adapted to convert rotary movement of the first power transmission shaft (10) into rotary movement of the generator (22);
- a first pedal crank (12), which has a first end coupled to the first power transmission shaft (10) and a second end, to which a first pedal (14) for a user's foot is rotatably connected so that the first pedal crank (12) is adapted to perform reciprocating rotary movement in relation to the first rotating axis (X1); and
- a second pedal crank (16), which has a first end coupled to the first power transmission shaft (10) and a second end, to which a second pedal (18) for the user's other foot is rotatably connected so that the second pedal crank (16) is adapted to perform reciprocating rotary movement in relation to the first rotation axis (X1);
**characterised in that** the pedal arrangement further comprises:
- a third pedal crank (44), which has a first end connected to the first power transmission shaft (10), and a second end, to which a third pedal (46) for a second user's foot is rotatably connected so that the third pedal crank (44) is adapted to perform reciprocating rotary movement in relation to the first rotation axis (X1); and
- a fourth pedal crank (48), which has a first end coupled to the first power transmission shaft (10), and a second end, to which a fourth pedal (50) for the second user's other foot is rotatably connected so that the fourth pedal crank (48) is adapted to perform reciprocating rotary movement in relation to the first rotating axis (X1).

2. The pedal arrangement according to claim 1, wherein the first pedal crank (12) and the second pedal crank (16) are, in their position of use, suspended below the first power transmission shaft (10) and adapted to perform there the said reciprocating rotary movement.

3. The pedal arrangement according to claim 1 or 2, wherein the pedal arrangement further comprises:
- synchronisation elements (20), which are coupled, on the one hand, to the first pedal crank (12) and, on the other hand, to the second pedal crank (16), and which are adapted
- to force the first pedal crank (12) to move in a second direction of rotation (R2) while, at the same time, the second pedal crank (16) is forced by the user to move in the first direction of rotation (R1), which is opposite to the second direction of rotation (R2), and
- to force in turn the second pedal crank (16) to move in the second direction of rotation (R2) while, at the same time, the first pedal crank (12) is forced by the user to move in the first direction of rotation (R1).

4. The pedal arrangement according to any one of claims 1 to 3, further comprising a first sensor device (122), which is adapted to detect whether the third pedal crank (44) and/or the fourth pedal crank (48) is in such motion, which forces the first power transmission shaft (10) into rotary movement in the first direction of rotation (R1).

5. The pedal arrangement according to any one of claims 1 to 4, further comprising a second sensor device (124), which is adapted to detect whether the first pedal crank (12) and/or the second pedal crank (16) is in such motion, which forces the first power transmission shaft (10) into rotary movement in the first direction of rotation (R1).

6. The pedal arrangement according to claims 3 and 5, wherein the second sensor device (124) is coupled to the first pedal crank (12) or to the second pedal crank (16), or to the synchronisation elements (20), which are, on the one hand, connected to the first pedal crank (12) and, on the other hand, to the second pedal crank (16).

7. A pedal arrangement for a vehicle, comprising:
- a first power transmission shaft (10), which defines a fictitious first rotating axis (X1) and which is adapted to rotate at least in a first direction of rotation (R1) about the first rotating axis (X1);
- a generator (22), adapted to convert mechanical energy of rotary movement into electric energy;
- a mechanical power transmission apparatus (24), adapted to convert rotary movement of the first power transmission shaft (10) into rotary movement of the generator (22);
- an additional power transmission shaft (110), which defines a fictitious first additional rotating axis (X101) and which is adapted to rotate at least in a third direction of rotation (R101) about the first additional rotating axis;
- a first pedal crank (12), which has a first end coupled to the additional power transmission shaft (110) and a second end, which has a first pedal for a user's foot so that the first pedal crank is adapted to perform reciprocating rotary movement in relation to the first additional rotating axis (X101); and
- a second pedal crank (16), which has a first end coupled to the additional power transmission shaft (110) and a second end, which has a second pedal for the user's other foot so that the second pedal crank is adapted to perform reciprocating rotary movement in relation to the first additional rotating axis (X101); and
- wherein in the pedal arrangement the additional power transmission shaft (110) is parallel to the first power transmission shaft (10) and forms an extension for the first power transmission shaft (10) so that the first additional rotating axis (X101) joins with the first rotating axis (X1);
**characterised in that** the pedal arrangement further comprises:
- a third pedal crank (44), which has a first end coupled to the first power transmission shaft (10), and a second end, which has a third pedal (46) for a second user's foot so that the third pedal crank (44) is adapted to perform reciprocating rotary movement in relation to the first rotating axis (X1); and
- a fourth pedal crank (48), which has a first end coupled to the first power transmission shaft (10), and a second end, in which there is a fourth pedal (50) for the second user's other foot so that the fourth pedal crank (48) is adapted to perform reciprocating rotary movement in relation to the first rotating axis (X1).

8. The pedal arrangement according to claim 7, further comprising a first sensor device (120, 124), which is adapted to detect whether the first pedal crank (12) and/or the second pedal crank (16) is in such motion, which forces the additional power transmission shaft (110) into rotary movement in the third direction of rotation (R101).

9. The pedal arrangement according to claim 7 or 8, further comprising a second sensor device (122), which is adapted to detect whether the third pedal crank (44) and/or the fourth pedal crank (48) is in such motion, which forces the first power transmission shaft (10) into rotary movement in the first direction of rotation (R1).

10. An electric vehicle (62), comprising:
- a frame (76), which defines a longitudinal direction (Y1) of the frame;
- a seat (70) for the user;
- an electric transmission system (78) to move the electric vehicle (62);
- the pedal arrangement (64) according to any one of claims 1 to 6 or the pedal arrangement (64) according to any one of claims 7 to 9, attached to the frame (76);
- a storage battery (72) to store electric energy generated by the generator (22) and/or needed by the electric transmission system (78); and
- an electronic control unit (74), which is adapted to control operation of the storage battery (72) and/or the electric transmission system (78).

11. The electric vehicle according to claim 10, further comprising:
- a second seat (70) for the second user; and
- wherein the electronic control unit (74), based on measuring signals generated by sensor devices of the electric vehicle and on a predefined algorithm, is adapted to conclude whether the user is pedalling or not, when the said user is the driver of the electric vehicle, and further to conclude whether the second user is pedalling or not, when the said second user is a passenger of the electric vehicle.

12. The electric vehicle according to claim 11, wherein the electronic control unit (74) is adapted to control operation of the electric vehicle (62) and/or the electric transmission system (78) so that the electric vehicle is held stopped, when the driver is not pedalling and irrespective of whether the passenger is pedalling or not.

13. The electric vehicle according to claim 11 or 12, wherein the electronic control unit (74) is adapted to control operation of the electric vehicle (62) and/or the electric transmission system (78) so that the electric vehicle is set in motion or kept moving when the driver is pedalling and irrespective of whether the passenger is pedalling or not.

## Patentansprüche

1. Pedalanordnung für ein Fahrzeug, umfassend:
- eine erste Kraftübertragungswelle (10), die eine fiktive erste Drehachse (X1) definiert und die dazu ausgelegt ist, sich zumindest in einer ersten Drehrichtung (R1) um die erste Drehachse (X1) zu drehen;
- einen Generator (22), der dazu ausgelegt ist, mechanische Energie einer Drehbewegung in elektrische Energie umzuwandeln;
- eine mechanische Kraftübertragungsvorrichtung (24), die dazu ausgelegt ist, eine Drehbewegung der ersten Kraftübertragungswelle (10) in eine Drehbewegung des Generators (22) umzuwandeln;
- eine erste Tretkurbel (12), die ein erstes Ende aufweist, das mit der ersten Kraftübertragungswelle (10) gekoppelt ist, und ein zweites Ende aufweist, mit dem ein erstes Pedal (14) für einen Fuß eines Benutzers drehbar verbunden ist, so dass die erste Tretkurbel (12) ausgelegt ist, um eine hin- und hergehende Drehbewegung in Bezug auf die erste Drehachse (X1) durchzuführen; und
- eine zweite Tretkurbel (16), die ein erstes Ende aufweist, das mit der ersten Kraftübertragungswelle (10) gekoppelt ist, und ein zweites Ende aufweist, mit dem ein zweites Pedal (18) für einen anderen Fuß des Benutzers drehbar verbunden ist, so dass die zweite Tretkurbel (16) ausgelegt ist, um eine hin- und hergehende Drehbewegung in Bezug auf die erste Drehachse (X1) durchzuführen;
**dadurch gekennzeichnet, dass** die Pedalanordnung ferner umfasst:
- eine dritte Tretkurbel (44), die ein erstes Ende aufweist, das mit der ersten Kraftübertragungswelle (10) verbunden ist, und ein zweites Ende aufweist, mit dem ein drittes Pedal (46) für einen Fuß eines zweiten Benutzers drehbar verbunden ist, so dass die dritte Tretkurbel (44) ausgelegt ist, um eine hin- und hergehende Drehbewegung in Bezug auf die erste Drehachse (X1) durchzuführen; und
- eine vierte Tretkurbel (48), die ein erstes Ende aufweist, das mit der ersten Kraftübertragungswelle (10) gekoppelt ist, und ein zweites Ende aufweist, mit dem ein viertes Pedal (50) für einen anderen Fuß des zweiten Benutzers drehbar verbunden ist, so dass die vierte Tretkurbel (48) ausgelegt ist, um eine hin- und hergehende Drehbewegung in Bezug auf die erste Drehachse (X1) durchzuführen.

2. Pedalanordnung nach Anspruch 1, wobei die erste Tretkurbel (12) und die zweite Tretkurbel (16) in ihrer Verwendungsstellung unter der ersten Kraftübertragungswelle (10) aufgehängt und ausgelegt sind, dort die hin- und hergehende Drehbewegung durchzuführen.

3. Pedalanordnung nach Anspruch 1 oder 2, wobei die Pedalanordnung ferner umfasst:
- Synchronisationselemente (20), die einerseits mit der ersten Tretkurbel (12) und andererseits mit der zweiten Tretkurbel (16) gekoppelt sind, und die ausgelegt sind,
- um die erste Tretkurbel (12) zu zwingen, sich in einer zweiten Drehrichtung (R2) zu bewegen, während gleichzeitig die zweite Tretkurbel (16) durch den Benutzer gezwungen wird, sich in der ersten Drehrichtung (R1) zu bewegen, die der zweiten Drehrichtung (R2) entgegengesetzt ist, und
- um die zweite Tretkurbel (16) wiederum zu zwingen, sich in der zweiten Drehrichtung (R2) zu bewegen, während gleichzeitig die erste Tretkurbel (12) durch den Benutzer gezwungen wird, sich in der ersten Drehrichtung (R1) zu bewegen.

4. Pedalanordnung nach einem der Ansprüche 1 bis 3, ferner umfassend eine erste Sensorvorrichtung (122), die ausgelegt ist, zu erfassen, ob die dritte Tretkurbel (44) und/oder die vierte Tretkurbel (48) in einer derartigen Bewegung sind/ist, die die erste Kraftübertragungswelle (10) in eine Drehbewegung in der ersten Drehrichtung (R1) zwingt.

5. Pedalanordnung nach einem der Ansprüche 1 bis 4, ferner umfassend eine zweite Sensorvorrichtung (124), die ausgelegt ist, zu erfassen, ob die erste Tretkurbel (12) und/oder die zweite Tretkurbel (16) in einer derartigen Bewegung sind/ist, die die erste Kraftübertragungswelle (10) in eine Drehbewegung in der ersten Drehrichtung (R1) zwingt.

6. Pedalanordnung nach einem der Ansprüche 3 und 5, wobei die zweite Sensorvorrichtung (124) mit der ersten Tretkurbel (12) oder mit der zweiten Tretkurbel (16) oder mit den Synchronisationselementen (20) gekoppelt ist, die einerseits mit der ersten Tretkurbel (12) und andererseits mit der zweiten Tretkurbel (16) verbunden sind.

7. Pedalanordnung für ein Fahrzeug, umfassend:
- eine erste Kraftübertragungswelle (10), die eine fiktive erste Drehachse (X1) definiert und die dazu ausgelegt ist, sich zumindest in einer ersten Drehrichtung (R1) um die erste Drehachse (X1) zu drehen;
- einen Generator (22), der dazu ausgelegt ist, mechanische Energie einer Drehbewegung in elektrische Energie umzuwandeln;
- eine mechanische Kraftübertragungsvorrichtung (24), die dazu ausgelegt ist, eine Drehbewegung der ersten Kraftübertragungswelle (10) in eine Drehbewegung des Generators (22) umzuwandeln;
- eine zusätzliche Kraftübertragungswelle (110), die eine fiktive erste zusätzliche Drehachse (X101) definiert und die dazu ausgelegt ist, sich zumindest in einer dritten Drehrichtung (R101) um die erste zusätzliche Drehachse zu drehen;
- eine erste Tretkurbel (12), die ein erstes Ende aufweist, das mit der zusätzlichen Kraftübertragungswelle (110) gekoppelt ist, und ein zweites Ende aufweist, das ein erstes Pedal für einen Fuß eines Benutzers aufweist, so dass die erste Tretkurbel ausgelegt ist, um eine hin- und hergehende Drehbewegung in Bezug auf die erste zusätzliche Drehachse (X101) durchzuführen; und
- eine zweite Tretkurbel (16), die ein erstes Ende aufweist, das mit der zusätzlichen Kraftübertragungswelle (110) gekoppelt ist, und ein zweites Ende aufweist, das ein zweites Pedal für einen anderen Fuß des Benutzers aufweist, so dass die zweite Tretkurbel ausgelegt ist, um eine hin- und hergehende Drehbewegung in Bezug auf die erste zusätzliche Drehachse (X101) durchzuführen; und
- wobei in der Pedalanordnung die zusätzliche Kraftübertragungswelle (110) parallel zu der ersten Kraftübertragungswelle (10) ist und eine Verlängerung für die erste Kraftübertragungswelle (10) bildet, so dass die erste zusätzliche Drehachse (X101) mit der ersten Drehachse (X1) zusammenläuft;
**dadurch gekennzeichnet, dass** die Pedalanordnung ferner umfasst:
- eine dritte Tretkurbel (44), die ein erstes Ende aufweist, das mit der ersten Kraftübertragungswelle (10) gekoppelt ist, und ein zweites Ende aufweist, das ein drittes Pedal (46) für einen Fuß eines zweiten Benutzers aufweist, so dass die dritte Tretkurbel (44) ausgelegt ist, um eine hin- und hergehende Drehbewegung in Bezug auf die erste Drehachse (X1) durchzuführen; und
- eine vierte Tretkurbel (48), die ein erstes Ende aufweist, das mit der ersten Kraftübertragungswelle (10) gekoppelt ist, und ein zweites Ende aufweist, in dem sich ein viertes Pedal (50) für einen anderen Fuß des zweiten Benutzers befindet, so dass die vierte Tretkurbel (48) ausgelegt ist, um eine hin- und hergehende Drehbewegung in Bezug auf die erste Drehachse (X1) durchzuführen.

8. Pedalanordnung nach Anspruch 7, ferner umfassend eine erste Sensorvorrichtung (120, 124), die ausgelegt ist, zu erfassen, ob die erste Tretkurbel (12) und/oder die zweite Tretkurbel (16) in einer derartigen Bewegung sind/ist, die die zusätzliche Kraftübertragungswelle (110) in eine Drehbewegung in der dritten Drehrichtung (R101) zwingt.

9. Pedalanordnung nach Anspruch 7 oder 8, ferner umfassend eine zweite Sensorvorrichtung (122), die ausgelegt ist, zu erfassen, ob die dritte Tretkurbel (44) und/oder die vierte Tretkurbel (48) in einer derartigen Bewegung sind/ist, die die erste Kraftübertragungswelle (10) in eine Drehbewegung in der ersten Drehrichtung (R1) zwingt.

10. Elektrofahrzeug (62), umfassend:
- einen Rahmen (76), der eine Längsrichtung (Y1) des Rahmens definiert;
- einen Sitz (70) für den Benutzer;
- ein elektrisches Übertragungssystem (78), um das Elektrofahrzeug (62) zu bewegen;
- die Pedalanordnung (64) nach einem der Ansprüche 1 bis 6 oder die Pedalanordnung (64) nach einem der Ansprüche 7 bis 9, die an dem Rahmen (76) angebracht ist;
- eine Speicherbatterie (72), um elektrische Energie zu speichern, die von dem Generator (22) erzeugt und/oder von dem elektrischen Übertragungssystem (78) benötigt wird; und
- eine elektronische Steuereinheit (74), die ausgelegt ist, um einen Betrieb der Speicherbatterie (72) und/oder des elektrischen Übertragungssystems (78) zu steuern.

11. Elektrofahrzeug nach Anspruch 10, ferner umfassend:
- einen zweiten Sitz (70) für den zweiten Benutzer; und
- wobei die elektronische Steuereinheit (74) basierend auf Messsignalen, die von Sensorvorrichtungen des Elektrofahrzeugs erzeugt werden, und auf einem vordefinierten Algorithmus ausgelegt ist, um zu schließen, ob der Benutzer in die Pedale tritt oder nicht, wenn der Benutzer der Fahrer des Elektrofahrzeugs ist, und ferner um zu schließen, ob der zweite Benutzer in die Pedale tritt oder nicht, wenn der zweite Benutzer ein Fahrgast des Elektrofahrzeugs ist.

12. Elektrofahrzeug nach Anspruch 11, wobei die elektronische Steuereinheit (74) ausgelegt ist, einen Betrieb des Elektrofahrzeugs (62) und/oder des elektrischen Übertragungssystems (78) derart zu steuern, dass das Elektrofahrzeug angehalten gehalten wird, wenn der Fahrer nicht in die Pedale tritt und unabhängig davon, ob der Fahrgast in die Pedale tritt oder nicht.

13. Elektrofahrzeug nach Anspruch 11 oder 12, wobei die elektronische Steuereinheit (74) ausgelegt ist, einen Betrieb des Elektrofahrzeugs (62) und/oder des elektrischen Übertragungssystems (78) derart zu steuern, dass das Elektrofahrzeug in Bewegung gesetzt oder in Bewegung gehalten wird, wenn der Fahrer in die Pedale tritt und unabhängig davon, ob der Fahrgast in die Pedale tritt oder nicht.

## Revendications

1. Agencement de pédales pour un véhicule, comprenant :
- un premier arbre de transmission de puissance (10), qui définit un premier axe de rotation (X1) fictif et qui est conçu pour être en rotation au moins dans une première direction de rotation (R1) autour du premier axe de rotation (X1) ;
- un générateur (22), conçu pour convertir une énergie mécanique de mouvement rotatif en énergie électrique ;
- un appareil de transmission de puissance mécanique (24), conçu pour convertir un mouvement rotatif du premier arbre de transmission de puissance (10) en un mouvement rotatif du générateur (22) ;
- une première manivelle de pédale (12), qui possède une première extrémité couplée au premier arbre de transmission de puissance (10) et une seconde extrémité, à laquelle une première pédale (14) pour un pied d'un utilisateur est reliée de manière rotative de sorte que la première manivelle de pédale (12) est conçue pour réaliser un mouvement rotatif de va-et-vient par rapport au premier axe de rotation (X1) ; et
- une deuxième manivelle de pédale (16), qui possède une première extrémité couplée au premier arbre de transmission de puissance (10) et une seconde extrémité, à laquelle une deuxième pédale (18) pour l'autre pied de l'utilisateur est reliée de manière rotative de sorte que la deuxième manivelle de pédale (16) est conçue pour réaliser un mouvement rotatif de va-et-vient par rapport au premier axe de rotation (X1) ;
**caractérisé en ce que** l'agencement de pédales comprend en outre :
- une troisième manivelle de pédale (44), qui possède une première extrémité reliée au premier arbre de transmission de puissance (10) et une seconde extrémité, à laquelle une troisième pédale (46) pour un pied d'un second utilisateur est reliée de manière rotative de sorte que la troisième manivelle de pédale (44) est conçue pour réaliser un mouvement rotatif de va-et-vient par rapport au premier axe de rotation (X1) ; et
- une quatrième manivelle de pédale (48), qui possède une première extrémité couplée au premier arbre de transmission de puissance (10) et une seconde extrémité, à laquelle une quatrième pédale (50) pour l'autre pied du second utilisateur est reliée de manière rotative de sorte que la quatrième manivelle de pédale (48) est conçue pour réaliser un mouvement rotatif de va-et-vient par rapport au premier axe de rotation (X1).

2. Agencement de pédales selon la revendication 1, dans lequel la première manivelle de pédale (12) et la deuxième manivelle de pédale (16) sont, dans leur position d'utilisation, suspendues au-dessous du premier arbre de transmission de puissance (10) et conçues pour réaliser ici ledit mouvement rotatif de va-et-vient.

3. Agencement de pédales selon la revendication 1 ou 2, dans lequel l'agencement de pédales comprend en outre :
- des éléments de synchronisation (20), qui sont couplés, d'une part, à la première manivelle de pédale (12) et, d'autre part, à la deuxième manivelle de pédale (16), et qui sont conçus
- pour contraindre la première manivelle de pédale (12) à se déplacer dans une deuxième direction de rotation (R2) tandis que, dans le même temps, la deuxième manivelle de pédale (16) est contrainte par l'utilisateur à se déplacer dans la première direction de rotation (R1), qui est opposée à la deuxième direction de rotation (R2), et
- pour contraindre en retour la deuxième manivelle de pédale (16) à se déplacer dans la deuxième direction de rotation (R2) tandis que, dans le même temps, la première manivelle de pédale (12) est contrainte par l'utilisateur à se déplacer dans la première direction de rotation (R1).

4. Agencement de pédales selon l'une quelconque des revendications 1 à 3, comprenant en outre un premier dispositif capteur (122), qui est conçu pour détecter si la troisième manivelle de pédale (44) et/ou la quatrième manivelle de pédale (48) est dans un mouvement tel qu'il contraint le premier arbre de transmission de puissance (10) dans un mouvement rotatif dans la première direction de rotation (R1).

5. Agencement de pédales selon l'une quelconque des revendications 1 à 4, comprenant en outre un second dispositif capteur (124), qui est conçu pour détecter si la première manivelle de pédale (12) et/ou la deuxième manivelle de pédale (16) est dans un mouvement tel qu'il contraint le premier arbre de transmission de puissance (10) dans un mouvement rotatif dans la première direction de rotation (R1).

6. Agencement de pédales selon les revendications 3 et 5, dans lequel le second dispositif capteur (124) est couplé à la première manivelle de pédale (12) ou à la deuxième manivelle de pédale (16), ou aux éléments de synchronisation (20), qui sont, d'une part, reliés à la première manivelle de pédale (12) et, d'autre part, à la deuxième manivelle de pédale (16).

7. Agencement de pédales pour un véhicule, comprenant :
- un premier arbre de transmission de puissance (10), qui définit un premier axe de rotation (X1) fictif et qui est conçu pour être en rotation au moins dans une première direction de rotation (R1) autour du premier axe de rotation (X1) ;
- un générateur (22), conçu pour convertir une énergie mécanique de mouvement rotatif en énergie électrique ;
- un appareil de transmission de puissance mécanique (24), conçu pour convertir un mouvement rotatif du premier arbre de transmission de puissance (10) en un mouvement rotatif du générateur (22) ;
- un arbre de transmission de puissance supplémentaire (110), qui définit un premier axe de rotation supplémentaire (X101) fictif et qui est conçu pour être en rotation au moins dans une troisième direction de rotation (R101) autour du premier axe de rotation supplémentaire ;
- une première manivelle de pédale (12), qui possède une première extrémité couplée au premier arbre de transmission de puissance supplémentaire (110) et une seconde extrémité, qui possède une première pédale pour un pied d'un utilisateur de sorte que la première manivelle de pédale est conçue pour réaliser un mouvement rotatif de va-et-vient par rapport au premier axe de rotation supplémentaire (X101) ; et
- une deuxième manivelle de pédale (16), qui possède une première extrémité couplée au premier arbre de transmission de puissance supplémentaire (110) et une seconde extrémité, qui possède une deuxième pédale pour l'autre pied de l'utilisateur de sorte que la deuxième manivelle de pédale est conçue pour réaliser un mouvement rotatif de va-et-vient par rapport au premier axe de rotation supplémentaire (X101) ; et
- dans lequel, dans l'agencement de pédales, l'arbre de transmission de puissance supplémentaire (110) est parallèle au premier arbre de transmission de puissance (10) et forme une extension pour le premier arbre de transmission de puissance (10) de sorte que le premier axe de rotation supplémentaire (X101) rejoint le premier axe de rotation (X1) ;
**caractérisé en ce que** l'agencement de pédales comprend en outre :
- une troisième manivelle de pédale (44), qui possède une première extrémité couplée au premier arbre de transmission de puissance (10) et une seconde extrémité, qui possède une troisième pédale (46) pour un pied d'un second utilisateur de sorte que la troisième manivelle de pédale (44) est conçue pour réaliser un mouvement rotatif de va-et-vient par rapport au premier axe de rotation (X1) ; et
- une quatrième manivelle de pédale (48), qui possède une première extrémité couplée au premier arbre de transmission de puissance (10) et une seconde extrémité, dans laquelle se trouve une quatrième pédale (50) pour l'autre pied du second utilisateur de sorte que la quatrième manivelle de pédale (48) est conçue pour réaliser un mouvement rotatif de va-et-vient par rapport au premier axe de rotation (X1).

8. Agencement de pédales selon la revendication 7, comprenant en outre un premier dispositif capteur (120, 124), qui est conçu pour détecter si la première manivelle de pédale (12) et/ou la deuxième manivelle de pédale (16) est dans un mouvement tel qu'il contraint l'arbre de transmission de puissance supplémentaire (110) dans un mouvement rotatif dans la troisième direction de rotation (R101).

9. Agencement de pédales selon la revendication 7 ou 8, comprenant en outre un second dispositif capteur (122), qui est conçu pour détecter si la troisième manivelle de pédale (44) et/ou la quatrième manivelle de pédale (48) est dans un mouvement tel qu'il contraint le premier arbre de transmission de puissance (10) dans un mouvement rotatif dans la première direction de rotation (R1).

10. Véhicule électrique (62), comprenant :
- un châssis (76), qui définit une direction longitudinale (Y1) du châssis ;
- un siège (70) pour l'utilisateur ;
- un système de transmission électrique (78) pour déplacer le véhicule électrique (62) ;
- l'agencement de pédales (64) selon l'une quelconque des revendications 1 à 6 ou l'agencement de pédales (64) selon l'une quelconque des revendications 7 à 9, fixé au châssis (76) ;
- une batterie de stockage (72) pour stocker l'énergie électrique générée par le générateur (22) et/ou requise par le système de transmission électrique (78) ; et
- une unité de commande électronique (74), qui est conçue pour commander un fonctionnement de la batterie de stockage (72) et/ou du système de transmission électrique (78).

11. Véhicule électrique selon la revendication 10, comprenant en outre :
- un second siège (70) pour le second utilisateur ; et
- dans lequel l'unité de commande électronique (74), sur la base de signaux de mesure générés par des dispositifs capteurs du véhicule électrique et d'un algorithme prédéfini, est conçue pour conclure si l'utilisateur pédale ou non, lorsque ledit utilisateur est le conducteur du véhicule électrique, et en outre pour conclure si le second utilisateur pédale ou non, lorsque ledit second utilisateur est un passager du véhicule électrique.

12. Véhicule électrique selon la revendication 11, dans lequel l'unité de commande électronique (74) est conçue pour commander un fonctionnement du véhicule électrique (62) et/ou du système de transmission électrique (78) de sorte que le véhicule électrique est maintenu à l'arrêt lorsque le conducteur ne pédale pas et indépendamment de si le passager pédale ou non.

13. Véhicule électrique selon la revendication 11 ou 12, dans lequel l'unité de commande électronique (74) est conçue pour commander un fonctionnement du véhicule électrique (62) et/ou du système de transmission électrique (78) de sorte que le véhicule électrique est mis en mouvement ou maintenu en mouvement lorsque le conducteur pédale et indépendamment de si le passager pédale ou non.
